# EUROPÄISCHE PATENTSCHRIFT

(11) **EP 2 135 030 B1**
(45) Veröffentlichungstag und Bekanntmachung des Hinweises auf die Patenterteilung: **01.06.2016**
(21) Anmeldenummer: 08734489.1
(22) Anmeldetag: 09.04.2008
(51) Int. Cl.: G01B 11/24

(54) **VERFAHREN UND VORRICHTUNG ZUR OPTISCHEN VERMESSUNG VON AUSSENGEWINDEN**
METHOD AND DEVICE FOR OPTICALLY MEASURING EXTERNAL THREADS
PROCÉDÉ ET DISPOSITIF DESTINÉS À LA MESURE OPTIQUE DE FILETS EXTÉRIEURS

(30) Priorität: 12.04.2007 DE 102007017747
(43) Veröffentlichungstag der Anmeldung: 23.12.2009
(73) Patentinhaber: Vallourec Deutschland GmbH, 40472 Düsseldorf (DE)
(72) Erfinder: GSCHWENDTNER, Hans, 47441 Moers (DE); HENGSTENBERG, Wolfgang, 47800 Krefeld (DE); PIANEZZI, Alaine, F-59300 Famars (FR)
(74) Vertreter: Meissner, Peter E.
(86) Internationale Anmeldenummer: PCT/DE2008/000679
(87) Internationale Veröffentlichungsnummer: WO 2008/125102

(56) Entgegenhaltungen:
- EP-A- 0 913 707
- WO-A-2005/022076
- US-A- 4 979 815
- US-A1- 2006 261 294

## Beschreibung

Die Erfindung betrifft ein Verfahren und eine Vorrichtung zur optischen Vermessung von Außengewinden, insbesondere an Rohren, gemäß den Patentansprüchen 1 und 7.

Mit Außengewinden werden beispielsweise Rohre für Rohrleitungen versehen, die insbesondere unter Druck stehende Fluide, wie z. B. Gas oder Öl, befördern. Hierbei werden die Rohre endseitig mit einem Außengewinde versehen und mit einem Muffenelement, das ein Innengewinde aufweist, miteinander verschraubt.

Bei diesen unter Druck stehenden Rohrleitungen werden hohe Anforderungen an die Verschraubungen und damit an die Qualität der Gewinde gestellt.

Solche Rohre werden z. B. als Casings (Schutzrohre) und Tubings (Steigrohre) bei der Öl- und Gasförderung verwendet.

Die typische Außendurchmesser dieser Rohre betragen 60,3 bis 177,8 mm an denen Gewinde mit bis zu 48 Gewindegängen geschnitten werden.

Die Qualitätsüberprüfung der geschnittenen Rohrgewinde erfordert eine geometrische Vermessung der Gewindeprofile, um sie mit den Soll-Vorgaben vergleichen zu können. Insbesondere werden dabei folgende Werte gemessen:
- Durchmesser jedes Gewindegangs,
- Steigung des Gewindes pro Zoll,
- Breite des freien Randes zwischen Rohrende und Gewindeanfang,
- Gewindelänge in mm,
- Gewindetiefe,
- Gewindekontur,
- nicht durchgeschnittene Gewinde.

Für die Qualitätsüberprüfung können in der Fertigungslinie beim Schneiden der Gewinde bei einer Taktzeit von beispielsweise 15 bis 25 Sekunden nur manuelle Stichprobenkontrollen durchgeführt werden.

Das manuelle Vermessen der Gewinde ist zeitaufwändig, kostenintensiv und für eine umfassende Qualitätsprüfung nicht ausreichend. Außerdem besteht die Gefahr, dass bei nur stichprobenweiser Prüfung Verschlechterungen der Gewindequalität nicht rechtzeitig erkannt werden und sich der Ausschuss und die Gefahr von Reklamationen erhöhen.

Aus der DE 103 59 837 A1 sind ein optisches Verfahren und eine Vorrichtung zum automatischen Überprüfen von Gewindebeschädigungen bei Verbindungselementen, wie z. B. Schrauben, bekannt.

Die Vorrichtung besitzt eine Einrichtung zum Beleuchten der zu überprüfenden Schraube, wobei die Beleuchtungseinrichtung derart zur Schraube ausgerichtet ist, dass die Lichtstrahlen im Wesentlichen senkrecht zu einer Flanke des Gewindes abgestrahlt werden.

Die Vorrichtung besteht weiterhin aus einer Auffangoptik zum Auffangen der von der Flanke des Gewindes reflektierten Lichtstrahlen, wobei die Auffangoptik derart zum Verbindungselement ausgerichtet ist, dass im Wesentlichen die senkrecht zur Flanke des Gewindes reflektierten Lichtstrahlen aufgefangen werden.

Eine Vermessung von Rohrgewinden ist mit dieser Vorrichtung jedoch nicht durchführbar, da das Gewindeprofil nicht erfasst wird.

Weitere Vorrichtungen zur Prüfung von Gegenständen wie auch Schrauben mittels optischer Einrichtungen sind aus der US 2006/0261294 A1,der WO 2005/022076 A2, der US 4979815 und der EP 0913707 A1 bekannt.

Aufgabe der Erfindung ist es, ein Verfahren zur optischen Vermessung von Profilen von Außengewinden, insbesondere von Außengewinden an Rohren, anzugeben, mit dem eine kostengünstige und 100%-ige Prüfung der Gewinde während der getakteten Gewinde-Erzeugung möglich ist. Eine weitere Aufgabe besteht darin, eine entsprechende Vorrichtung anzugeben.

Diese Aufgaben werden durch ein Verfahren mit den Merkmalen des unabhängigen Verfahrensanspruchs 1 sowie durch eine Vorrichtung mit den Merkmalen des unabhängigen Vorrichtungsanspruchs 7 gelöst. Vorteilhafte Weiterbildungen ergeben sich aus den abhängigen Ansprüchen.

Nach der Lehre der Erfindung wird das Profil des zuvor erzeugten Gewindes über eine aus Rotation und Translation bestehende Relativbewegung zwischen Rohr und mindestens einer im Gegenlicht angeordneten, aus Beleuchtung und Kamera bestehenden Vermessungseinheit vom Gewindeanfang bis zum Gewindeende tangential zum Rohrquerschnitt beleuchtet bzw. abgetastet.

Das Abbild der Gewindekontur wird von der Kamera kontinuierlich erfasst und die optischen Signale werden direkt im Anschluss ausgewertet und mit den Sollvorgaben verglichen.

Die Abtastgeschwindigkeit wird erfindungsgemäß so eingestellt, dass die Zeit für das Abtasten des Gewindeprofils unter Berücksichtigung der erforderlichen Ortsauflösung der Kamera innerhalb der Taktzeit liegt, die für die nächste Gewindeherstellung erforderlich ist.

In umfangreichen Betriebsversuchen wurde nachgewiesen, dass die zur optischen Vermessung des Gewindes notwendigen Parameter des Gewindeprofils mit dem erfindungsgemäßen Verfahren vorteilhaft vollständig erfasst und ausgewertet werden können.

Durch das vorzugsweise automatisierte Verfahren ist es jetzt möglich, während des Gewindeschneidens ohne den Produktionsablauf unterbrechen zu müssen eine 100%-ige Gewindekontrolle und damit eine vollständige Qualitätsprüfung vorzunehmen.

Über die ermöglichte In-Line Messung der Gewinde kann jetzt bei Qualitätsveränderungen direkt Einfluss auf den Gewindeschneidprozess genommen werden. Nacharbeiten der Gewinde und Ausschuss werden so minimiert und die Gefahr von Reklamationen durch nicht erkannte Mängel des Gewindes werden deutlich reduziert oder sogar ausgeschlossen.

Vorteilhaft werden zur optischen Erfassung des Gewindeprofils hoch auflösende CCD-Kameras verwendet, die eine gleichzeitige Auswertung mehrerer Gewindegänge ermöglichen.

In einer vorteilhaften Ausführungsform erfolgt die Beleuchtung mit telezentrischem Licht und einer entsprechend ausgelegten Kamera mit telezentrischem Objektiv.

Der Einsatz von telezentrischen Komponenten hat den Vorteil, dass das Messsystem von Fremdlichteinstrahlungen durch Sonnen- und Hallenlicht unbeeinflusst bleibt. Die Gewindekontur hebt sich bei dieser Methode kontrastreich als dunkles Objekt von einem hellen Hintergrund ab.

Der Vergleich der Messergebnisse mit den vorgegebenen Sollwerten gibt Aussage über die Gewinde-Qualität.

Bei großen Rohr- bzw. Gewindedurchmessern erfolgt die Vermessung des Gewindes vorteilhaft mit mindestens zwei Kameras gleichzeitig an zwei gegenüber liegenden Stellen des Rohres, da sonst nicht erkannt werden kann, ob Verschiebungen der Profilkontur in den Kamerabildern auf Gewindefehlern oder auf Fehlpositionierungen des Rohres zur Vermessungseinheit beruhen.

Wegen des telezentrischen Strahlengangs bleibt bei kleinen Positionsabweichungen der Skalenfaktor konstant, so dass die Messgenauigkeit nicht eingeschränkt ist.

Abhängig von der angewandten Optik, kann bei Verwendung von zwei Vermessungseinheiten während einer halben Rohrumdrehung der vollständige Rohrumfang mit den entsprechenden Gewindegängen erfasst werden.

Zur Erhöhung der Leistung können erfindungsgemäß auch weitere Vermessungseinheiten für eine parallele Aufnahme und Auswertung des Gewindeprofils installiert werden.

Entsprechend der geometrischen Auslegung der Komponenten der Vermessungseinheit bzw. der zu prüfenden Gewindedurchmesser kann die Relativbewegung zwischen Rohr und Vermessungseinheit erfindungsgemäß auf verschiedene Weise realisiert werden.

Zum Einen kann wie zur kontinuierlichen Vermessung des Gewindes das Rohr in Rotation versetzt und die Vermessungseinheit über dem Gewinde in Rohrlängsrichtung translatorisch verfahren werden.

Eine weitere Möglichkeit besteht darin, dass die Vermessungseinheit um das Gewinde des Rohres rotiert und gleichzeitig in Rohrlängsrichtung translatorisch verfahren wird.

Zudem besteht die Möglichkeit, dass zur kontinuierlichen Vermessung des Gewindes die Vermessungseinheit fest positioniert ist und das Rohr unter der Vermessungseinheit rotatorisch und translatorisch verfahren wird.

Eine weitere Möglichkeit besteht darin, dass das Rohr fest positioniert und die Vermessungseinheit rotatorisch und translatorisch verfahren wird.

Vor der Anwendung der vorteilhaft automatischen Serienmessung des Gewindeprofils eines bestimmten Rohrtyps, ist es erforderlich in einem Lernmodus die Soll-Parameter einzustellen. Dies sind in erster Linie die Vorgaben für die Gewinde- und Rohrparameter sowie die einzuhaltenden Toleranzwerte.

Erfindungsgemäß wird die Sollkontur entweder als mathematische Kurve beschrieben oder durch Einlegen eines Gutmusters, das als Bild im System gespeichert wird und so als Referenz für die Serienmessungen dient. Außerdem kann das Gutmuster vorteilhaft auch für die Kalibrierung der Kameras dienen.

Falls das Rohr drehbar und die Vermessungseinheit translatorisch gelagert ist, kann es aufgrund nicht exakt ausgerichteter Lagerungen fallweise zu einem unbeabsichtigten "Wandern" des Rohres in Längsrichtung bei der Drehung kommen.

Eine solche Lageveränderung kann dazu führen, dass die Gewindelänge während der Messung nicht exakt ermittelt werden kann, und diese Messung erst während der Rückfahrt der Vermessungseinheit in die Ausgangsposition erfolgen kann.

Um diesen Einfluss auf die Ermittlung der Gewindelänge zu erfassen, wird nach einem weiteren vorteilhaften Merkmal die Position des Rohrendes in Bezug auf die Position der Vermessungseinheit in Rohrlängsrichtung kontinuierlich ermittelt und unter Berücksichtigung einer auftretenden Rohrlängsverschiebung während der Vermessung die Gewindelänge kontinuierlich errechnet, so dass die Gewindelänge schon auf der Hinfahrt der Vermessungseinheit ermittelt werden kann.

Vorteilhaft wird die Positionsermittlung des Rohrendes in axialer Richtung nach dem Prinzip der Lasertriangulation ermittelt. Hierbei wird beispielsweise unter einem Winkel von etwa 30° bis 40° zur Rohrachse eine CCD-Kamera auf das Rohrende ausgerichtet. In direkter Verlängerung des Rohres bzw. der Rohrachse wird ein Linien-Laser angeordnet, der eine Laserlinie auf das Rohr projiziert. Die Kamera nimmt die Position der Laserlinie auf.

Ergibt sich während des Drehens eine Längsverschiebung des Rohres, so bewegt sich die Laserlinie im Kamerabild nach unten oder oben. Dadurch lässt sich die axiale Position des Rohrendes direkt bestimmen.

Aus der Höhenposition der Laserlinie im Kamerabild kann der Abstand bzw. die Positionsänderung vom Linien-Laser zum Rohr, also der Rohrposition in Längsrichtung, gemessen werden. Die Auflösung der Messung liegt dabei in einem Bereich von ca. 0,5 mm.

Zusätzlich wird vorteilhaft erkannt, ob sich auf dem Rohrende noch eine Schutzkappe oder Muffe befindet. In diesem Fall wird die Länge der Laserlinie größer und ein Warnsignal gesetzt. Durch dieses Signal wird verhindert, dass das Messsystem aus seiner Grundstellung herausfährt und mechanisch beschädigt wird.

Die erfindungsgemäße Positionserfassung bietet wesentliche Vorteile:
- Die Gewindelänge wird nicht mehr auf der Rückfahrt der Verfahreinheit bei stehendem Rohr gemessen sondern direkt bei der Hinfahrt mit allen anderen Messwerten, jedoch dann um den Wert einer auftretenden Längsverschiebung korrigiert.
- Die Rückfahrt der Verfahreinheit kann mit hoher Geschwindigkeit erfolgen.

Weitere Merkmale, Vorteile und Einzelheiten der Erfindung ergeben sich aus der nachfolgenden Beschreibung.

Es zeigen:
- **Figur 1**: Prinzipskizze der erfindungsgemäßen Vorrichtung mit zwei Vermessungseinheiten zur optischen Vermessung der Kontur eines Rohraußengewindes,
- **Figur 2**: erfindungsgemäße Messeinheit zur Erfassung der Längsposition des Rohres während der Vermessung.

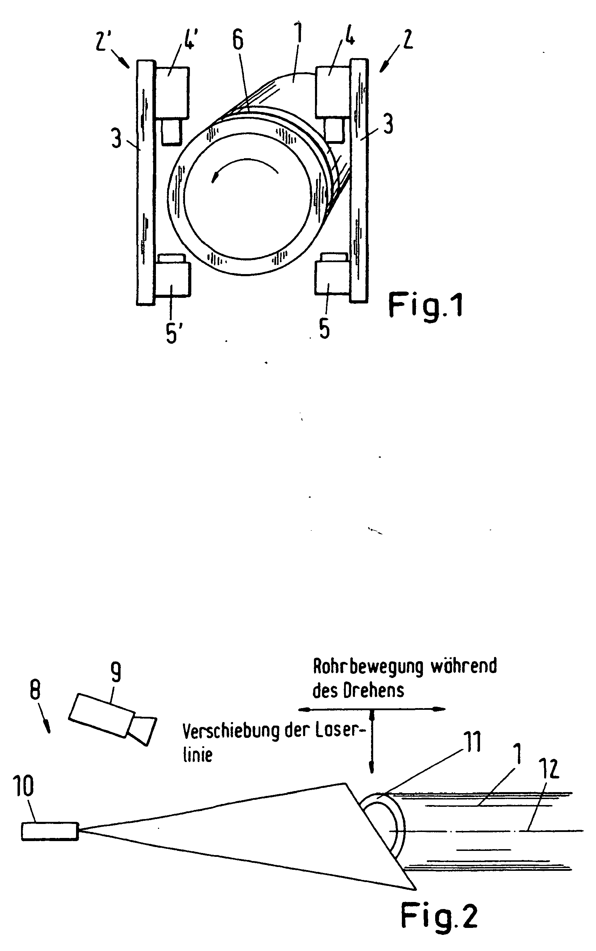

In **Figur 1** ist in einer Prinzipskizze die erfindungsgemäße Vorrichtung zur Vermessung der Gewindekontur von Außengewinden an Rohren dargestellt.

Zur Erhöhung der Leistung, d. h. zur Verkürzung der Messzeit, ist die Vorrichtung mit zwei Vermessungseinheiten 2 versehen, die bezogen auf den Rohrquerschnitt gegenüber liegend angeordnet sind.

Die Vermessungseinheiten 2 bestehen aus einer je an einem Träger 3 befestigten Beleuchtung 5, 5' und einer Kamera 4, 4', die in Gegenlichtanordnung so ausgerichtet ist, dass das zu vermessende Gewinde 6 des Rohres 1 tangential zum Rohrquerschnitt beleuchtet bzw. abgetastet und das Abbild der Gewindekontur von der Kamera erfasst wird.

Erfindungsgemäß sind Beleuchtung 5, 5' und Kamera 4, 4' für telezentrisches Licht ausgelegt.

Die optischen Signale werden anschließend mit einer hier nicht dargestellten Auswerteeinheit ausgewertet und anschließend mit den einzuhaltenden Sollvorgaben verglichen.

Erfindungsgemäß wird die zur Gewindevermessung notwendige Relativbewegung zwischen Rohr 1 und den Vermessungseinheiten 2, 2' dadurch realisiert, dass das Rohr 1 drehbar und die Vermessungseinheiten 2, 2' in Längsrichtung des Rohres 1 translatorisch verfahrbar ist.

Über die zwei gegenüber liegenden telezentrischen Vermessungseinheiten 2, 2' wird dann in einer halben Rohrumdrehung der vollständige Rohrumfang mit der entsprechenden von der verwendeten Optik der Kamera 4, 4' abhängigen Anzahl von Gewindegängen erfasst. Gleichzeitig wird über einen hier nicht dargestellten Linearantrieb die Vermessungseinheit 2, 2' in Längsrichtung des Rohres 1 verfahren und dabei das Gewinde 6 vom Anfang bis zum Ende vollständig vermessen.

Bei der Vermessung wird die Abtastgeschwindigkeit erfindungsgemäß so eingestellt, dass die Zeit für das Abtasten des Gewindeprofils unter Berücksichtigung der erforderlichen Ortsauflösung der Kamera innerhalb der Herstellungs-Taktzeit des nächsten Gewindes liegt.

Es kann somit direkt auf den Fertigungsprozess des Gewindeschneidens der nachfolgenden Gewinde Einfluss genommen werden und das fehlerhafte Gewinde nachgearbeitet werden.

**Figur 2** zeigt eine erfindungsgemäße Messeinheit zur Erfassung der Längsposition des Rohres während der Vermessung.

Das Meßsystem 8 besteht erfindungsgemäß aus einem Linien-Laser 10 und einer Kamera 9.

Der Linien-Laser 10 ist in einem Abstand zum Rohrende in Linie der Rohrachse 12 und die Kamera 9 in einem Winkel zur Rohrachse 12 angeordnet.

Der Linien-Laser 10 projiziert eine Laserlinie auf das Rohr 1. Die Kamera 9 nimmt die Position der Laserlinie auf. Verändert das Rohr 1 während des Drehens seine Längsposition, so bewegt sich die Laserlinie im Kamerabild nach unten oder oben. Wodurch sich die axiale Position des Rohrendes direkt bestimmen lässt.

Aus der Höhenposition der Laserlinie im Kamerabild wird der Abstand bzw. die Positionsänderung vom Linien-Laser zum Rohr, also der Rohrposition in Längsrichtung, ermittelt. Als günstig hat sich herausgestellt, die Kamera 9 unter einem Winkel von etwa 30° bis 40° zur Rohrachse auf das Rohrende auszurichten.

Die von der Vermessungseinheit 2, 2' (**Figur 1**) ermittelte Gewindelänge wird um den Wert der Rohrlängsverschiebung korrigiert, und die Gewindelänge schon auf der Hinfahrt der Messung exakt ermittelt.

**Bezugszeichenliste**

| **Nr.** | **Bezeichnung** |
|---|---|
| 1 | Rohr |
| 2, 2' | Vermessungseinheit |
| 3 | Träger |
| 4, 4' | telezentrische Kamera |
| 5, 5' | telezentrische Beleuchtung |
| 6 | Gewinde |
| 7 | Kontur Gewindezahn |
| 8 | Messsystem Rohrposition |
| 9 | Kamera für Positionsmessung |
| 10 | Linien-Laser für Positionsmessung |
| 11 | Stirnfläche Rohr |
| 12 | Rohrachse |

## Patentansprüche

1. Verfahren zur optischen Vermessung des Außengewinde-Profils von Rohren, wobei die Gewinde (6) zuvor in einer Fertigungslinie getaktet erzeugt und vor der Weiterverarbeitung in Linie vom Anfang bis zum Ende des Gewindes (6) kontinuierlich vermessen werden,
wobei das Profil des zuvor erzeugten Gewindes (6) über eine aus Rotation und Translation bestehende Relativbewegung zwischen Rohr (1) und mindestens einer in Gegenlicht angeordneten aus Beleuchtung (5,5') und Kamera (4,4') bestehenden optischen Vermessungseinheit (2,2') tangential zum Rohrquerschnitt beleuchtet und abgetastet wird, indem das Abbild der Gewindekontur von der Kamera erfasst wird, und wobei die optischen Signale anschließend ausgewertet und mit Sollvorgaben verglichen werden,
**dadurch gekennzeichnet,**
**dass** die Abtastgeschwindigkeit so eingestellt wird, dass die Zeit für das Abtasten des Gewindeprofils unter Berücksichtigung der erforderlichen Ortsauflösung der Kamera innerhalb der Taktzeit für die Herstellung des nachfolgenden Gewindes liegt,
**dass** die Position des Rohrendes in Bezug auf die Position der Vermessungseinheit (2,2') in Rohrlängsrichtung kontinuierlich ermittelt und während der Vermessung die Gewindelänge unter Berücksichtigung etwaiger Positionsveränderungen errechnet wird,
und **dass** die Positionsermittlung mittels Lasertriangulation erfolgt.

2. Verfahren nach Anspruch 1,
**dadurch gekennzeichnet,**
**dass** die Beleuchtung (5,5') mit telezentrischem Licht erfolgt.

3. Verfahren nach Anspruch 1 oder 2,
**dadurch gekennzeichnet,**
**dass** mit mindestens zwei Vermessungseinheiten (2,2') gleichzeitig an zwei gegenüber liegenden Stellen bezogen auf den Rohrquerschnitt gemessen wird.

4. Verfahren nach einem der Ansprüche 1-3,
**dadurch gekennzeichnet,**
**dass** zur kontinuierlichen Vermessung des Gewindes (6) das Rohr (1) in Rotation versetzt und die Vermessungseinheit (2,2') Ober dem Gewinde in Rohrlängsrichtung translatorisch verfahren wird.

5. Verfahren nach einem der Ansprüche 1-3,
**dadurch gekennzeichnet,**
**dass** zur kontinuierlichen Vermessung des Gewindes (6) die Vermessungseinheit (2,2') um das Gewinde (6) des Rohres (1) rotiert und gleichzeitig in Rohrlängsrichtung translatorisch verfahren wird.

6. Verfahren nach einem der Ansprüche 1 - 3,
**dadurch gekennzeichnet,**
**dass** zur kontinuierlichen Vermessung des Gewindes(6) die Vermessungseinheit (2,2') fest positioniert ist und das Rohr (1) unter der Vermessungseinheit (2,2') rotatorisch und translatorisch verfahren wird.

7. Vorrichtung zur Durchführung des Verfahrens nach einem der Ansprüche 1 - 6 mit mindestens einer aus einer Beleuchtung und einer Kamera bestehenden Vermessungseinheit (2,2'), einer Auswertereinheit und mit einer optischen Messeinheit (8) zur Erfassung der Längsposition des Rohres (1) relativ zur Position der Vermessungseinheit (2, 2'), wobei die Vorrichtung ausgebildet ist um die Position des Rohrendes in Bezug auf die Position der Vermessungseinheit (2,2') in Rohrlängsrichtung kontinuierlich zu ermitteln und während der Vermessung die Gewindelänge unter Berücksichtigung etwaiger Positionsveränderungen zu errechnen, wobei
die Beleuchtung (5, 5') und Kamera (4, 4') an einem Träger (3) in Gegenlichtanordnung in tangentialer Richtung zum Querschnitt des Rohres (1) positioniert sind und die Vermessungseinheit (2, 2') und das Rohr (1) relativ zueinander rotatorisch und translatorisch bewegbar gelagert sind,
und wobei die Messeinheit (8) aus einem die Stirnfläche (11) des Rohrendes bestrahlenden Linien-Laser (10) und einer die von der Stirnfläche (11) des Rohres (1) reflektierten Lichtstrahlen des Lasers (10) aufnehmenden Kamera (9) besteht, wobei der Linien-Laser (10) in einem Abstand zum Rohrende in Linie der Rohrachse (12) und die Kamera (9) in einem Winkel zur Rohrachse (12) angeordnet ist.

8. Vorrichtung nach Anspruch 7,
**dadurch gekennzeichnet,**
**dass** die Vermessungseinheit (2, 2') aus einer telezentrischen Beleuchtung (5, 5') und einer telezentrischen Kamera (4, 4') besteht.

9. Vorrichtung nach Anspruch 7 oder 8,
**dadurch gekennzeichnet,**
**dass** mindestens zwei parallel messende Vermessungseinheiten (2, 2') an zwei gegenüber liegenden Stellen bezogen auf den Querschnitt des Rohres (1) angeordnet sind.

10. Vorrichtung nach den Ansprüchen 7 - 9,
**dadurch gekennzeichnet,**
**dass** die Kameras (4,4') der Vermessungseinheit (2,2') CCD-Kameras sind.

11. Vorrichtung nach den Ansprüchen 7-10.
**dadurch gekennzeichnet,**
**dass** das Rohr (1) drehbar und die Vermessungseinheit (2, 2') translatorisch bewegbar gelagert ist.

12. Vorrichtung nach den Ansprüchen 7 - 10,
**dadurch gekennzeichnet,**
**dass** das Rohr (1) fest positioniert und die Vermessungseinheit (2, 2') rotatorisch und translatorisch bewegbar gelagert ist.

13. Vorrichtung nach den Ansprüchen 7 - 10,
**dadurch gekennzeichnet,**
**dass** die Vermessungseinheit (2, 2') fest positioniert und das Rohr (1) rotatorisch und translatorisch bewegbar gelagert ist.

14. Vorrichtung nach einem der Ansprüche 7 - 13,
**dadurch gekennzeichnet,**
**dass** die Kamera (9) der Messeinheit eine CCD- Kamera ist.

## Claims

1. A method for optically measuring the external thread profile of pipes, wherein the threads (6) are produced beforehand in clocked manner on a production line and before further processing are measured continuously in-line from the start to the end of the thread (6),
wherein the profile of the thread (6) produced beforehand is illuminated and scanned tangentially to the pipe cross-section by means of a relative movement, consisting of rotation and translation, between the pipe (1) and at least one optical measuring unit (2, 2'), arranged in backlight, consisting of illumination (5, 5') and a camera (4, 4'), in that the image of the thread contour is detected by the camera, and wherein the optical signals are then evaluated and compared with target specifications,
**characterised in that**
the scan rate is set such that the time for scanning the thread profile, taking into account the local resolution of the camera which is required, lies within the clock time for production of the subsequent thread,
the position of the pipe end in relation to the position of the measuring unit (2, 2') in the longitudinal direction of the pipe is continuously ascertained and during the measurement the thread length is calculated, taking into consideration any changes in position,
and **in that** the position is determined by means of laser triangulation.

2. A method according to Claim 1, **characterised in that** the illumination (5, 5') takes place with telecentric light.

3. A method according to Claim 1 or 2, **characterised in that** measurement is carried out with at least two measuring units (2, 2') at the same time at two opposing points in relation to the pipe cross-section.

4. A method according to one of Claims 1 - 3, **characterised in that** for continuous measurement of the thread (6) the pipe (1) is caused to rotate and the measuring unit (2, 2') is moved in translation over the thread in the longitudinal direction of the pipe.

5. A method according to one of Claims 1 - 3, **characterised in that** for continuous measurement of the thread (6) the measuring unit (2, 2') is rotated about the thread (6) of the pipe (1) and at the same time is moved in translation in the longitudinal direction of the pipe.

6. A method according to one of Claims 1 - 3, **characterised in that** for continuous measurement of the thread (6) the measuring unit (2, 2') is positioned in fixed manner and the pipe (1) is moved in rotation and in translation under the measuring unit (2, 2').

7. A device for carrying out the method according to one of Claims 1 - 6, with at least one measuring unit (2, 2') consisting of illumination and a camera, an evaluation unit, and with an optical measuring unit (8) for detecting the longitudinal position of the pipe (1) in relation to the position of the measuring unit (2, 2'), wherein the device is designed to determine the position of the pipe end in relation to the position of the measuring unit (2, 2') continuously in the longitudinal direction of the pipe and during the measurement to calculate the thread length, taking into consideration any changes in position, wherein
the illumination (5, 5') and camera (4, 4') are positioned on a support (3) in a backlight arrangement in the tangential direction to the cross-section of the pipe (1), and the measuring unit (2, 2') and the pipe (1) are mounted for rotary and translatory movement in relation to one another,
and wherein the measuring unit (8) consists of a line laser (10) which irradiates the end face (11) of the pipe end and a camera (9) which records the light beams of the laser (10) which are reflected by the end face (11) of the pipe (1), wherein the line laser (10) is arranged at a distance from the pipe end in line with the pipe axis (12) and the camera (9) at an angle to the pipe axis (12).

8. A device according to Claim 7, **characterised in that** the measuring unit (2, 2') consists of a telecentric illumination (5, 5') and a telecentric camera (4, 4').

9. A device according to Claim 7 or 8, **characterised in that** at least two measuring units (2, 2') which measure in parallel are arranged at two opposing points in relation to the cross-section of the pipe (1).

10. A device according to Claims 7 - 9, **characterised in that** the cameras (4,4') of the measuring unit (2, 2') are CCD cameras.

11. A device according to Claims 7 - 10, **characterised in that** the pipe (1) is mounted for rotary movement and the measuring unit (2, 2') is mounted for translatory movement.

12. A device according to Claims 7 - 10, **characterised in that** the pipe (1) is positioned in fixed manner and the measuring unit (2, 2') is mounted for rotary and translatory movement.

13. A device according to Claims 7 - 10, **characterised in that** the measuring unit (2, 2') is positioned in fixed manner and the pipe (1) is mounted for rotary and translatory movement.

14. A device according to one of Claims 7 - 13, **characterised in that** the camera (9) of the measuring unit is a CCD camera.

## Revendications

1. Procédé servant à mesurer de manière optique le profil de filet extérieur de tubes, les filets (6) étant produits de manière cadencée au préalable dans une ligne de production et étant mesurés en continu avant de poursuivre la transformation en ligne du début à la fin du filet (6),
le profil du filet (6) produit au préalable étant éclairé et balayé de manière tangentielle par rapport à la section transversale de tube par l'intermédiaire d'un déplacement relatif par rotation et par translation entre le tube (1) et au moins une unité de mesure (2, 2') optique constituée d'un éclairage (5, 5') et d'une caméra (4, 4'), disposée à contre-jour en ce que l'image du contour de filet est enregistrée par la caméra, et les signaux optiques étant analysés par la suite et comparés à des spécifications théoriques, **caractérisé en ce**
**que** la vitesse de balayage est réglée de telle sorte que la durée pour le balayage du profil de filet se situe dans le délai cadencé pour la fabrication du filet qui suit en tenant compte de la résolution spatiale requise de la caméra,
en ce que la position de l'extrémité de tube est déterminée en continu par rapport à la position de l'unité de mesure (2, 2') dans la direction longitudinale de tube et est calculée au cours de la mesure de la longueur de filet en tenant compte de tous les changements de position,
et en ce que la détermination de position se fait au moyen d'une triangulation laser.

2. Procédé selon la revendication 1,
**caractérisé en ce**
**que** l'éclairage (5, 5') se fait à l'aide d'une lumière télécentrique.

3. Procédé selon la revendication 1 ou 2,
caractérisé en
que la mesure est effectuée à l'aide d'au moins deux unités de mesure (2, 2') de manière simultanée au niveau de deux emplacements se faisant face par rapport à la section transversale de tube.

4. Procédé selon l'une quelconque des revendications 1 - 3,
**caractérisé en ce**
**que** le tube (1) est amené en rotation aux fins de la mesure continue du filet (6), et en ce que l'unité de mesure (2, 2') est déplacée par translation sur le filet dans la direction longitudinale de tube.

5. Procédé selon l'une quelconque des revendications 1 - 3,
**caractérisé en ce**
**qu'**aux fins de la mesure en continu du filet (6), l'unité de mesure (2, 2') tourne autour du filet (6) du tube (1) et est déplacée de manière simultanée par translation dans la direction longitudinale de tube.

6. Procédé selon l'une quelconque des revendications 1 - 3,
**caractérisé en ce**
**qu'**aux fins de la mesure en continu du filet (6), l'unité de mesure (2, 2') est positionnée de manière fixe, et en ce que le tube (1) est déplacé par rotation et par translation sous l'unité de mesure (2, 2').

7. Dispositif servant à la mise en oeuvre du procédé selon l'une quelconque des revendications 1 - 6, comprenant au moins une unité de mesure (2, 2') constituée d'un éclairage et d'une caméra, une unité d'analyse et une unité de mesure (8) optique servant à enregistrer la position longitudinale du tube (1) par rapport à la position de l'unité de mesure (2, 2'), le dispositif étant réalisé pour déterminer en continu la position de l'extrémité de tube par rapport à la position de l'unité de mesure (2, 2') dans la direction longitudinale de tube et pour la calculer au cours de la mesure la longueur de filet en tenant compte de tous les changements de position,
l'éclairage (5, 5') et la caméra (4, 4') étant positionnés au niveau d'un support (3) selon l'agencement à contre-jour dans une direction tangentielle par rapport à la section transversale du tube (1) et l'unité de mesure (2, 2') et le tube (1) étant montés l'un par rapport à l'autre de manière à pouvoir être déplacés par rotation et par translation, et l'unité de mesure (8) étant constituée d'un laser à raies (10) exposant à un rayonnement la face frontale (11) de l'extrémité de tube et d'une caméra (9) réalisant des prises de vue des rayons de lumière du laser (10) réfléchis par la face frontale (11) du tube (1), le laser à raies (10) étant disposé à une distance donnée par rapport à l'extrémité de tube en ligne avec l'axe de rotation (12) et la caméra (9) étant disposée selon un angle donné par rapport à l'axe de tube (12).

8. Dispositif selon la revendication 7,
**caractérisé en ce**
**que** l'unité de mesure (2, 2') est constituée d'un éclairage (5, 5') télécentrique et d'une caméra (4, 4') télécentrique.

9. Dispositif selon la revendication 7 ou 8,
**caractérisé en ce**
**qu'**au moins deux unités de mesure (2, 2') effectuant des mesures de manière parallèle sont disposées au niveau de deux emplacements se faisant face par rapport à la section transversale du tube (1).

10. Dispositif selon les revendications 7 - 9,
**caractérisé en ce**
**que** les caméras (4, 4') de l'unité de mesure (2, 2') sont des caméras CCD.

11. Dispositif selon les revendications 7 - 10,
**caractérisé en ce**
**que** le tube (1) est monté de manière à pouvoir tourner, et en ce que l'unité de mesure (2, 2') est montée de manière à pouvoir être déplacée par translation.

12. Dispositif selon les revendications 7 - 10,
**caractérisé en ce**
**que** le tube (1) est positionné de manière fixe, et en ce que l'unité de mesure (2, 2') est montée de manière à pouvoir être déplacée par rotation et par translation.

13. Dispositif selon les revendications 7 - 10,
**caractérisé en ce**
**que** l'unité de mesure (2, 2') est positionnée de manière fixe, et en ce que le tube (1) est monté de manière à pouvoir être déplacé par rotation et par translation.

14. Dispositif selon l'une quelconque des revendications 7 - 13,
**caractérisé en ce**
**que** la caméra (9) de l'unité de mesure est une caméra CCD.
